# EUROPEAN PATENT APPLICATION

(11) **EP 4 560 764 A1**
(43) Date of publication of application: **28.05.2025**
(21) Application number: 24750543.1
(22) Date of filing: 30.01.2024
(51) Int. Cl.: H01M 10/0562, H01M 10/052, H01M 10/058

(54) **SOLID ELECTROLYTE, METHOD FOR PREPARING SAME, AND ALL-SOLID-STATE BATTERY COMPRISING SAME**

(30) Priority: 30.01.2023 KR 20230012072
(71) Applicant: LG Chem, Ltd., Yeongdeungpo-gu Seoul 07336 (KR)
(72) Inventor: JEON, Do Yeon, Daejeon 34122 (KR); PARK, Chang Hun, Daejeon 34122 (KR); KIM, In Gyu, Daejeon 34122 (KR); CHUNG, Ha Bin, Daejeon 34122 (KR); LEE, Dong Geon, Daejeon 34122 (KR)
(74) Representative: Plasseraud IP
(86) International application number: PCT/KR2024/001423
(87) International publication number: WO 2024/162745

(57) **Abstract**

The present invention relates to a solid electrolyte having a composition represented by chemical formula 1 below, a method for preparing same, and an all-solid state battery comprising same. [Chemical formula 1] Li11-(5a+3b+c+2x)PaGabS5-(c+x)X(1+c), where X is one or more selected from F, Cl, Br, and I, and 5.0<5a+3b+c+2x<6.0, 0<b≤0.5, 0≤c<0.7, 0<c+x<1, 1≤a+b≤1.5.

## Description

### TECHNICAL FIELD

### Cross-reference to Related Applications

This application claims the benefit of Korean Patent Application No. 10-2023-0012072, filed on January 30, 2023, in the Korean Intellectual Property Office, the disclosure of which is incorporated herein in its entirety by reference.

### Technical Field

The present invention relates to a solid electrolyte having an argyrodite-type crystal structure with improved air stability, a method for preparing the same, and an all-solid-state battery including the same.

### BACKGROUND ART

An all-solid-state battery is a battery in which a liquid electrolyte filling between a positive electrode and a negative electrode of a typical lithium secondary battery is replaced with a solid electrolyte, and is attracting attention as a next-generation battery because it is safe due to no risk of explosion and has a higher energy density than a typical battery. The solid electrolyte used in the all-solid-state battery is a solid-state material capable of conducting lithium ions in the battery, and has a high ion conductivity similar to that of an electrolyte currently applied in a lithium secondary battery. A core material constituting the solid electrolyte includes a polymer, a sulfide, an oxide, or the like, but among them, a sulfide-based solid electrolyte having high ductility and high ion conductivity is evaluated as being suitable for manufacturing high-capacity, large-sized batteries.

However, the sulfide-based solid electrolyte is highly reactive to moisture, and thus, has a problem of reacting not only with moisture in the air, but also with moisture under low humidity conditions, thereby generating hydrogen sulfide (H₂S), which is a harmful gas. As a result, there is a problem in that toxic hydrogen sulfide adversely affects the safety of workers, and also deteriorates the performance of the sulfide-based solid electrolyte itself.

Therefore, there is a need to develop a sulfide-based solid electrolyte with excellent air stability.

(Patent Document 001) KR 10-2017-0021751 A

### DISCLOSURE OF THE INVENTION

### TECHNICAL PROBLEM

An object of the present invention is to provide a solid electrolyte with improved air stability, specifically moisture stability.

However, objects to be achieved by the present invention are not limited to the above-mentioned object, and other objects which are not mentioned may be apparent to those skilled in the art from the following description.

### TECHNICAL SOLUTION

In order to achieve the above-described object, the present invention provides a solid electrolyte, a method for preparing the same, and an all-solid-state battery.
(1) The present invention provides a solid electrolyte having a composition represented by Chemical Formula 1 below.

   [Chemical Formula 1] Li_{11-(5a+3b+c+2x)}PₐGa_{b}S_{5-(c+x)}X_{1+c}

   In Chemical Formula 1 above, X is one or more selected from F, Cl, Br, and I, and 5.0<5a+3b+c+2x<6.0, 0<b≤0.5, 0≤c<0.7, 0<c+x<1, and 1≤a+b≤1.5.
(2) In (1) above, the present invention provides a solid electrolyte, wherein the b is 0.01≤b≤0.3.
(3) In (1) or (2) above, the present invention provides a solid electrolyte, wherein the 5a+3b+c+2x is 5.0<5a+3b+c+2x≤5.7.
(4) In any one among (1) to (3) above, the present invention provides a solid electrolyte, wherein the solid electrolyte has an argyrodite-type crystal structure.
(5) In any one among (1) to (4) above, the present invention provides a solid electrolyte, wherein the solid electrolyte has an ion conductivity retention rate of 60% or more according to Equation 1 below.
   Ion conductivity retention rate (%) = Ion conductivity after exposure to moisture (mS/cm)/Initial ion conductivity (mS/cm) × 100
   In Equation 1 above, initial ion conductivity is a value measured at 22 °C immediately after preparing the solid electrolyte, and ion conductivity after exposure to moisture is a value measured at 22 °C immediately after exposing the solid electrolyte in the air having a relative humidity of 1.91% for 5 hours.
(6) In (5) above, the present invention provides a solid electrolyte, wherein the initial ion conductivity is 2.0 mS/cm or greater to 20.0 mS/cm or less.
(7) In (5) or (6) above, the present invention provides a solid electrolyte, wherein the ion conductivity after exposure to moisture is 1.2 mS/cm or greater to 12.0 mS/cm or less.
(8) In any one among (1) to (7) above, the present invention provides a solid electrolyte, wherein the solid electrolyte has a total content of impurities of 2 wt% or less.
(9) The present invention provides a method for preparing a solid electrolyte, the method including S1 dry-mixing a sulfide-based solid electrolyte raw material and a doping element to prepare a precursor mixture, and S2 heat-treating the precursor mixture, wherein the sulfide-based solid electrolyte raw material includes Li₂S, P₂S₅, and LiX, the X is F, Cl, Br, or I, the Li₂S is included in an amount of greater than 0.97 mole to less than 2.5 mole based on 1 mole of LiX, and the doping element is Ga.
(10) In (9) above, the present invention provides a method for preparing a solid electrolyte, wherein the step S1 is performed by ball-milling the sulfide-based solid electrolyte raw material and the doping element.
(11) In (9) or (10) above, the present invention provides a method for preparing a solid electrolyte, wherein the heat-treatment in the step S2 is performed at a temperature of 300 °C to 600 °C.
(12) The present invention provides an all-solid-state battery including a solid electrolyte according to any one among (1) to (8) above.

### ADVANTAGEOUS EFFECTS

A solid electrolyte according to the present invention is doped with Ga, and controls the composition ratio of lithium ions to a desired level of less, and thus, may suppress the generation of impurities and improve ion conductivity and moisture stability.

In addition, the solid electrolyte according to the present invention has a low content of non-reacted or side-reacted impurities, and has a uniform composition, and thus, may have an effect of excellent ion conductivity and air stability.

### BRIEF DESCRIPTION OF THE DRAWING

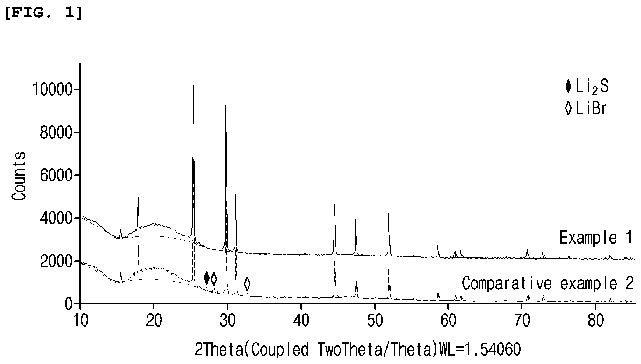

FIG. 1 shows XRD data for evaluating Example 1 and Comparative Example 2 for the detection of impurities.

### MDOE FOR CARRYING OUT THE INVENTION

Hereinafter, the present invention will be described in more detail to facilitate understanding of the present invention.

It will be understood that words or terms used herein shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used herein are only used to describe exemplary embodiments, and are not intended to limit the present invention. The terms of a singular form may include plural forms unless the context clearly indicates otherwise.

In the present specification, it should be understood that the terms ,"include," "comprise," or "have" are intended to specify the presence of stated features, numbers, steps, elements, or combinations thereof, but do not preclude the presence or addition of one or more other features, numbers, steps, elements, or combinations thereof.

The term 'all-solid-state battery' used in the present specification refers to a battery in which all components of the battery are solid, which is distinguished from a liquid electrolyte secondary battery using a liquid electrolyte such as an electrolyte solution and a gel polymer secondary battery using a polymer electrolyte instead of a separator and also using a liquid electrolyte.

### Solid electrolyte

A solid electrolyte according to the present invention has a composition represented by Chemical Formula 1 below. In this case, the solid electrolyte has high ionic conductivity, and low reactivity with a lithium negative electrode, and when the solid electrolyte is exposed to moisture or oxygen, decomposition and deterioration of particles of the solid electrolyte may be suppressed.

[Chemical Formula 1] Li_{11-(5a+3b+c+2x)}PₐGa_{b}S_{5-(c+x)}X_{1+c}

In Chemical Formula 1 above, X is one or more selected from F, Cl, Br, and I, and 5<5a+3b+c+2x<6, 0<b≤0.5, 0≤c<0.7, 0<c+x<1, and 1≤a+b≤1.5.

Meanwhile, in the case of Li₆PS₅Cl, Li₆PS₅Br, or the like, which is used as a solid electrolyte having an argyrodite-type crystal structure in the art, there is a problem in that S²⁻ ions contained in the solid electrolyte react with moisture in the air and are easily decomposed. However, the solid electrolyte having an argyrodite-type crystal structure according to the present invention may improve air stability by doping gallium (Ga) cations, which have excellent binding force with sulfur (S) ions, suppress the generation of impurities by controlling the composition ratio of lithium (Li) ions to a predetermined level or below, and have an effect of excellent ion conductivity and air stability.

According to an embodiment of the present invention, the b may be 0<b≤0.5, and the 5a+3b+c+2x may be 5.0<5a+3b+c+2x<6.0. Specifically, the b may be 0.01 or greater, 0.05 or greater, 0.07 or greater, 0.09 or greater, 0.5 or less, 0.48 or less, 0.44 or less, 0.4 or less, 0.36 or less, 0.34 or less, 0.3 or less, 0.26 or less, 0.22 or less, 0.20 or less, 0.16 or less, 0.14 or less, 0.12 or less, or 0.10 or less. In addition, the 5a+3b+c+2x may be greater than 5.1, greater than 5.2, greater than 5.3, greater than 5.4, greater than 5.5, less than 6.0, less than 5.9, less than 5.8, less than 5.7, and less than 5.6. If the above numerical ranges are satisfied, the doping amount of Ga cations is suitable, so that degradation or deterioration of solid electrolyte particles may be suppressed when exposed to moisture or oxygen. However, when a solid electrolyte doped with Ga cations is synthesized, impurities such as Li₂S or LiBr may be generated, thereby degrading ion conductivity, in which case by lowering the composition ratio of the lithium element, the solid electrolyte may be allowed to be present in an argyrodite phase with no or a low content of impurities, and accordingly, the ion conductivity may be improved.

In addition, the a may be 0.5 to less than 1.5, and the x may be greater than 0 to less than 1. Specifically, the a may be 0.5 or greater, 0.6 or greater, 0.7 or greater, 0.8 or greater, 0.9 or greater, 0.95 or greater, 1.5 or less, 1.4 or less, 1.3 or less, 1.2 or less, 1.1 or less, or 1.0 or less, and the x may be greater than 0, greater than 0.1, greater than 0.2, greater than 0.3, greater than 0.4, greater than 0.5, 1.0 or less, 0.9 or less, 0.8 or less, 0.7 or less, or 0.6 or less. If the above numerical ranges are satisfied, a sulfide solid electrolyte may improve lithium ion conductivity.

According to an embodiment of the present invention, the sulfide-based solid electrolyte of the present invention may also have an argyrodite-type crystal structure in terms of high ion conductivity, and low reactivity with a lithium negative electrode. When the sulfide-based solid electrolyte has an argyrodite-type crystal structure, it means that the sulfide-based solid electrolyte at least has a crystal phase of an argyrodite-type structure as the main phase. At this time, the main phase refers to a phase having the largest ratio based on the total amount of all crystal phases constituting a sulfide solid electrolyte. Therefore, the content ratio of the crystal phase of an argyrodite-type structure contained in the sulfide-based solid electrolyte is preferably 80 mass% or greater, more preferably 85 mass% or greater, 90 mass% or greater, or 95 mass% or greater, based on the total crystal phases constituting the sulfide-based solid electrolyte.

According to an embodiment of the present invention, the solid electrolyte may have an ion conductivity retention rate of 60% or more, specifically 65% or more, 70% or more, 75% or more, 80% or more, 85% or more, or 90% or more, according to Equation 1 below. Ion conductivity retention rate (%) = Ion conductivity after exposure to moisture (mS/cm)/Initial ion conductivity (mS/cm) × 100

In Equation 1 above, initial ion conductivity is a value measured at 22 °C and a relative humidity of 0.7%, immediately after preparing the solid electrolyte, and ion conductivity after exposure to moisture is a value measured at 22 °C, immediately after exposing the solid electrolyte in the air having a relative humidity of 1.91% for 5 hours.

According to an embodiment of the present invention, the solid electrolyte may have an initial ion conductivity of 2.0 mS/cm or greater to 20.0 mS/cm or less. Specifically, the initial ion conductivity may be 3.0 mS/cm or greater, 4.0 mS/cm or greater, 5.0 mS/cm or greater, 6.0 mS/cm or greater, 20.0 mS/cm or less, 19.0 mS/cm or less, or 18.0 mS/cm or less. The higher the initial ion conductivity of the electrolyte, the better it is, but if the initial ion conductivity satisfies the above range, the effect of improving process stability and moisture stability may be excellent.

According to the present invention, the solid electrolyte may have an ion conductivity of 1.2 mS/cm or greater to 12.0 mS/cm or less, after the exposure to moisture. Specifically, the ion conductivity may be 1.4 mS/cm or greater, 1.5 mS/cm or greater, 1.6 mS/cm or greater, 1.7 mS/cm or greater, 12.0 mS/cm or less, or 11.0 mS/cm or less. In this case, as in the case of the initial ion conductivity, the higher the ion conductivity of the electrolyte after exposure to moisture, the better it is, but if the ion conductivity after exposure to moisture satisfies the above range, so that the numerical range of the ion conductivity retention rate according to Equation 1 above is satisfied, there is an advantage in that the rate of deterioration in ion conductivity decreases and the electrolyte structure is maintained despite the exposure to moisture during a battery manufacturing process.

According to an embodiment of the present invention, the solid electrolyte may have a total content of impurities of 2 wt% or less. The impurities may include non-reactants which did not react during the preparation of the solid electrolyte, or side reactants generated by side reactions, and specifically, the impurities may be Li₂S or LiA. Here, A in the above-described impurities may be one or more elements selected from the group consisting of F, Cl, Br, and I. In addition, the content of the impurities can be obtained by analyzing XRD data of the solid electrolyte powder by using the Rietveld refinement program.

The impurities may have a total content of 2 wt% or less. The content of the impurities is based on 100 wt% of the solid electrolyte. For example, the content of the impurities may be 2.0 wt% or less, 1.9 wt% or less, 1.8 wt% or less, 1.7 wt% or less, 1.6 wt% or less, 1.5 wt% or less, 1.4 wt% or less, 1.3 wt% or less, 1.2 wt% or less, 1.1 wt% or less, 1.0 wt% or less, 0.9 wt% or less, 0.8 wt% or less, 0.7 wt% or less, 0.6 wt% or less, 0.5 wt% or less, 0.4 wt% or less, 0.3 wt% or less, 0.2 wt% or less, or 0.1 wt% or less. If the content of the impurities satisfies the above-described range, it can be confirmed that the precursors have been micronized and prepared by uniform mixing, and it is possible to obtain a solid electrolyte having a desired uniform composition. In addition, the solid electrolyte prepared by uniform mixing may have high ion conductivity and low electron conductivity, and may have an excellent level of ion conductivity retention rate by suppressing decomposition or deterioration of the solid electrolyte particles when exposed to moisture or oxygen, so that excellent performance properties may be obtained when the solid electrolyte is applied to an all-solid-state battery.

### Method for preparing solid electrolyte

A method for preparing a solid electrolyte of the present invention includes S1 dry-mixing a sulfide-based solid electrolyte raw material and a doping element to prepare a precursor mixture, and S2 heat-treating the precursor mixture. In addition, the sulfide-based solid electrolyte raw material may include Li₂S, P₂S₅, and LiX, wherein the X may be F, Cl, Br, or I, the Li₂S may be included in an amount of greater than 0.97 mole to less than 2.5 mole based on 1 mole of LiX, and the doping element may be Ga.

A solid electrolyte prepared by the method for preparing a solid electrolyte of the present invention may have the technical properties of the solid electrolyte described above, and the same contents as those described in relation to the solid electrolyte will be omitted.

According to an embodiment of the present invention, the Li₂S may be included in an amount of greater than 0.97 mole to less than 2.5 mole based on 1 mole of LiX, specifically, greater than 0.97 mole to less than 2.5 mole, less than 2.4 mole, or less than 2.3 mole. If a solid electrolyte is prepared by satisfying the above-described numerical range, the composition ratio of a lithium element may be controlled, so that the generation of impurities may be suppressed and the ionic conductivity may be improved.

According to an embodiment of the present invention, the step S1 may be performed by ball-milling the sulfide-based solid electrolyte raw material and the doping element. Specifically, the step S1 may be performed by ball-milling the sulfide-based solid electrolyte raw material and the doping element by using a planetary mill including zirconia (Zr) balls.

According to an embodiment of the present invention, the step S1 may be performed by introducing a sulfur (Li₂S) precursor, phosphorus (P₂S₅) precursor, and LiX precursor as the sulfide-based solid electrolyte raw materials to a zirconia container, and adding ZrO₂ balls thereto, followed by stirring and ball-milling. In addition, a precursor mixture prepared in the step S1 may be in the form of powder.

If a solid electrolyte is prepared by wet mixing such as slurrying or solutionizing, even if a drying or heat-treatment process is performed, a portion of a solvent remains in a carbonized state in a precursor mixture or the solid electrolyte, so that there is a problem in that electron conductivity increases. Therefore, the method for preparing a solid electrolyte according to the present invention dry-mixes precursors of a sulfide-based solid electrolyte in a powder form, thereby inducing uniform mixing, and may maximize the ion conductivity of the prepared solid electrolyte.

Meanwhile, during the process of ball-milling using the planetary mill, the higher the stirring speed, the higher the generation speed of the solid electrolyte precursor mixture, and the smaller the particle size, and the longer the stirring time, the higher the conversion rate to the uniformly mixed solid electrolyte precursor mixture. The stirring time may be 3 hours or more, 6 hours or more, 8 hours or more, 10 hours or more, 12 hours or more, 14 hours or more, or 24 hours or more, and the stirring speed may be 300 rpm or higher, 400 rpm or higher, 500 rpm or higher, 600 rpm or higher, 700 rpm or higher, or 800 rpm or higher.

According to an embodiment of the present invention, the heat-treatment of the step S2 may be performed at a temperature of 300 °C to 600 °C. More specifically, the heat-treatment temperature may be 300 °C or higher, 350 °C or higher, 400 °C or higher, 450 °C or higher, 500 °C or higher, 600 °C or lower, or 550 °C or lower. If the heat-treatment temperature is within the above-described range, an argyrodite phase may be formed from the precursor mixture. Particularly, if high-energy milling of 600 rpm or higher is performed in the step S1, through the heat-treatment process, an amorphous powder-type precursor mixture may be crystallized into an argyrodite solid electrolyte. In addition, if the above-described heat-treatment temperature range is satisfied, the problem of a residual unreacted precursor may be solved, and the problem of increased electron conductivity due to the loss of sulfur may also be solved.

### All-solid-state battery

The present invention provides an all-solid-state battery including the above-described solid electrolyte.

Specifically, the all-solid-state battery includes a positive electrode including a positive electrode active material, a negative electrode including a negative electrode active material, and a solid electrolyte layer including the solid electrolyte according to the present invention disposed between the positive electrode and the negative electrode.

The all-solid-state battery according to the present invention has less ion conductivity drop due to moisture, so that the initial efficiency, lifespan properties, and output properties of the battery may be excellent.

At this time, the all-solid-state battery of the present invention may be manufactured by a method commonly known in the art. For example, the all-solid-state battery may be manufactured by stacking and pressing such that a solid electrolyte layer is present between a positive electrode and a negative electrode.

### (1) Positive electrode

The positive electrode may be manufactured by coating a positive electrode slurry, which includes a positive electrode active material, a binder, a conductive material, a solvent, etc., on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, etc., may be used. Also, microscopic irregularities may be formed on the surface of the positive electrode current collector to improve the coupling force of a positive electrode active material, and the positive electrode current collector may be used in various forms, such as a film, a sheet, a foil, a net, a porous body, a foam body, and a non-woven fabric body.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (wherein 0<Y<1), LiMn_{2-z}Ni_{z}O₄ (wherein 0< Z< 2), etc.), a lithium-nickel-cobalt-based oxide (e_{.}g_{.}, LiNi_{1-Y1}Co_{Y1}O₂ (wherein 0<Y1<1), etc.), a lithium-manganese-cobalt-based oxide (e.g., LiCo_{1-Y2}Mn_{Y2}O₂ (wherein 0<Y2<1), LiMn_{2-z1}Co_{z1}O₄ (wherein 0< Z1< 2, etc.), a lithium-nickel-manganese-cobalt-based oxide (e.g., Li (NiₚCo_{q}Mnᵣ₁) O₂ (wherein 0< p< 1, 0< q< 1, 0< r1< 1, and p+q+r1=1) or Li(Niₚ₁Co_{q1}Mnᵣ₂)O₄ (wherein 0< p1< 2, 0< q1< 2, 0< r2< 2, and p1+q1+r2=2), etc.), or a lithium-nickel-cobalt-transition metal (M) oxide (e.g., Li (Niₚ₂Co_{q2}Mnᵣ₃As₂) O₂ (wherein M is selected from the group consisting of Al, Fe, V, Cr, Ti, Ta, Mg, and Mo, and p2, q2, r3, and s2 are each an atomic fraction of stand-alone elements, wherein 0< p2< 1, 0< q2< 1, 0< r3< 1, 0< s2< 1, and p2+q2+r3+s2=1), etc.) and the like, and any one thereof or a mixture of two or more thereof may be included.

Among these, due to the fact that the capacity properties and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}CO_{1/3})O₂, Li(Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, Li (Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.). When considering the effect of remarkable improvement according to the type and content ratio control of constituent elements forming a lithium metal oxide, the lithium metal oxide may be Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, Li (Ni_{0.8}Mn_{0.1}Co_{0.1})O₂, and the like, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on the total weight of solids excluding the solvent in the positive electrode slurry.

The binder is a component for assisting in coupling between a conductive material, an active material, and a current collector. Examples of the binder may include polyvinylidene fluoride, polyvinyl alcohol, carboxymethyl cellulose, starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, various copolymers thereof, and the like.

Commonly, the binder may be included in an amount of 1 wt% to 20 wt%, preferably 1 wt% to 15 wt%, and more preferably 1 wt% to 10 wt% based on the total weight of solids excluding the solvent in the positive electrode slurry.

The conductive material is a component for further improving the conductivity of a positive electrode active material.

The conductive material is not particularly limited as long as it has conductivity without causing a chemical change in the battery. For example, graphite; a carbon-based material such as carbon black, acetylene black, Ketjen black, channel black, furnace black, lamp black, and thermal black; conductive fiber such as carbon fiber and metal fiber; fluorocarbon powder; metal powder such as aluminum powder, and nickel powder; a conductive whisker such as zinc oxide and potassium titanate; a conductive metal oxide such as titanium oxide; and a conductive material such as a polyphenylene derivative, and the like may be used.

Commonly, the conductive material may be included in an amount of 1 wt% to 20 wt%, preferably 1 wt% to 15 wt%, and more preferably 1 wt% to 10 wt% based on the total weight of solids excluding the solvent in the positive electrode slurry.

The solvent may include an organic solvent such as N-methyl-2-pyrrolidone (NMP), and may be used in an amount such that a preferred viscosity is achieved when the positive electrode active material, and selectively a binder, a conductive material, and the like are included. For example, the solvent may be included in an amount such that the concentration of solids including the positive electrode active material, and selectively the binder and the conductive material is 50 wt% to 95 wt%, preferably 70 wt% to 95 wt%, and more preferably 70 wt% to 90 wt%.

### (2) Negative electrode

The negative electrode may be manufactured by, for example, coating a negative electrode slurry, which includes a negative electrode active material, a binder, a conductive material, a solvent, etc., on a negative electrode current collector, or a graphite electrode made of carbon (C) or a metal itself may be used as the negative electrode.

For example, when the negative electrode is manufactured by coating a negative electrode slurry on a negative electrode current collector, the negative electrode current collector typically has a thickness of 3 to 500 µm. The negative electrode current collector is not particularly limited as long as it has high conductivity without causing a chemical change in the battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, as in the case of the positive electrode current collector, microscopic irregularities may be formed on the surface of the negative electrode current collector to improve the biding force of a negative electrode active material, and the negative electrode current collector may be used in various forms of such as a film, a sheet, a foil, a net, a porous body, a foam body, and a non-woven fabric body.

Examples of the negative electrode active material may include one or two or more kinds of negative electrode active materials selected from the group consisting of natural graphite, artificial graphite, a carbonaceous material; a metal-containing substance such as a lithium-containing titanium composite oxide (LTO), Si, SiOₓ, Sn, Li, Zn, Mg, Cd, Ce, Ni or Fe; an alloy composed of the metal (Me); an oxide (MeOₓ) of the metal (Me); and a composite of the metal (Me) and carbon. Specifically, as the negative electrode active material, a silicon-based negative electrode active material including silicon (Si), a silicon oxide (SiOₓ), a silicon alloy, or the like may be used. In this case, a thin and stable SEI layer including a siloxane bond may be formed, so that the high-temperature stability and lifespan properties of a battery may be further improved.

The negative electrode active material may be included in an amount of 60 wt% to 99 wt%, preferably 70 wt% to 99 wt%, and more preferably 80 wt% to 98 wt% based on the total weight of solids excluding the solvent in the negative electrode slurry.

The binder is a component for assisting in coupling between a conductive material, an active material, and a current collector. Examples of the binder may include polyvinylidene fluoride, polyvinyl alcohol, carboxymethyl cellulose, starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, various copolymers thereof, and the like.

Commonly, the binder may be included in an amount of 1 wt% to 20 wt%, preferably 1 wt% to 15 wt%, and more preferably 1 wt% to 10 wt% based on the total weight of solids excluding the solvent in the negative electrode slurry.

The conductive material is a component for further improving the conductivity of a negative electrode active material. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; fluorocarbon powder; metal powder such as aluminum powder, and nickel powder; a conductive whisker such as zinc oxide and potassium titanate; a conductive metal oxide such as titanium oxide; or a conductive material such as a polyphenylene derivative, and the like may be used.

The conductive material may be included in an amount of 1 wt% to 20 wt%, preferably 1 wt% to 15 wt%, and more preferably 1 wt% to 10 wt% based on the total weight of solids excluding the solvent in the negative electrode slurry.

The solvent may include water, or an organic solvent such as N-methyl-2-pyrrolidone (NMP), and may be used in an amount such that a preferred viscosity is achieved when the negative electrode active material, and selectively a binder, a conductive material, and the like are included. For example, the solvent may be included in an amount such that the concentration of solids including the negative electrode active material, and selectively the binder and the conductive material is 50 wt% to 95 wt%, preferably 70 wt% to 90 wt%.

When a metal itself is used as the negative electrode, the metal thin film itself may be used as the negative electrode, or the negative electrode may be manufactured by physically bonding, roll-pressing, or depositing a metal on the negative electrode current collector. The depositing method may be electrical vapor deposition or chemical vapor deposition.

For example, the metal thin film itself, or the metal bonded/roll-pressed/deposited on the negative electrode current collector may be one metal selected from the group consisting of lithium (Li), nickel (Ni), tin (Sn), copper (Cu), and indium (In), or an alloy of two metals thereof.

### (3) Solid electrolyte layer

The solid electrolyte layer may further include a binder in addition to the solid electrolyte according to the present invention.

The binder is a component for assisting in coupling between a conductive material, an active material, and a current collector. Examples of the binder may include polyvinylidene fluoride, polyvinyl alcohol, carboxymethyl cellulose, starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, various copolymers thereof, and the like.

Commonly, the binder may be included in an amount of 1 wt% to 20 wt%, preferably 1 wt% to 15 wt%, and more preferably 1 wt% to 10 wt%, based on the total weight of the solid electrolyte layer.

The present invention provides a battery module including the all-solid-state battery as a unit cell and a battery pack including the battery module. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

Hereinafter, preferred embodiments of the present invention will be described in detail to facilitate understanding of the present invention. However, the embodiments are merely illustrative of the present invention, and thus, it will be apparent to those skilled in the art that various modifications and variations can be made without departing from the scope and spirit of the present invention as disclosed in the accompanying claims. It is obvious that such variations and modifications fall within the scope of the appended claims.

### Examples and Comparative Examples

### Example 1

Four types of precursors, Li₂S, P₂S₅, LiBr, and Ga₂S₃, were dry-mixed (ball milling) at a molar ratio of 2.25 : 0.45 : 1 : 0.05. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to obtain a solid electrolyte having a composition represented by Li_{5.5}P_{0.9}Ga_{0.1}S_{4.65}Br_{1.0} having an argyrodite-type crystal structure. All of the above process was performed in an inert Ar atmosphere.

The above-described Li_{5.5}P_{0.9}Ga_{0.1}S_{4.65}Br_{1.0} having an argyrodite-type crystal structure was used as a solid electrolyte of Example 1.

### Example 2

Four types of precursors, Li₂S, P₂S₅, LiBr, and Ga₂S₃, were dry-mixed (ball milling) at a molar ratio of 2.25 : 0.475 : 1 : 0.025. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to obtain a solid electrolyte having a composition represented by Li_{5.5}P_{0.95}Ga_{0.05}S_{4.7}Br_{1.0} having an argyrodite-type crystal structure. All of the above process was performed in an inert Ar atmosphere.

The above-described Li_{5.5}P_{0.95}Ga_{0.05}S_{4.7}Br_{1.0} having an argyrodite-type crystal structure was used as a solid electrolyte of Example 2.

### Comparative Example 1

Three types of precursors, Li₂S, P₂S₅, and LiBr, were dry-mixed (ball milling) at a molar ratio of 2.5 : 0.5 : 1. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li₆PS₅Br_{1.0} having an argyrodite-type crystal structure. All of the above process was performed in an inert Ar atmosphere.

The above-described Li₆PS₅Br_{1.0} having an argyrodite-type crystal structure was used as a solid electrolyte of Comparative Example 1.

### Comparative Example 2

Four types of precursors, Li₂S, P₂S₅, LiBr, Ga₂S₃, were dry-mixed (ball milling) at a molar ratio of 2.6 : 0.45 : 1 : 0.05. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{6.2}P_{0.9}Ga_{0.1}S₅Br_{1.0} having an argyrodite-type crystal structure. All of the above process was performed in an inert Ar atmosphere.

The above-described Li_{6.2}P_{0.9}Ga_{0.1}S₅Br_{1.0} having an argyrodite-type crystal structure was used as a solid electrolyte of Comparative Example 2.

### Comparative Example 3

Four types of precursors, Li₂S, P₂S₅, LiCl, and LiBr, were dry-mixed (ball milling) at a molar ratio of 1.9 : 0.5 : 1.2 : 0.4. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{5.4}PS_{4.4}Cl_{1.2}Br_{0.4} having an argyrodite-type crystal structure. All of the above process was performed in an inert Ar atmosphere.

The above-described Li_{5.4}PS_{4.4}Cl_{1.2}Br_{0.4} having an argyrodite-type crystal structure was used as a solid electrolyte of Comparative Example 3.

### Comparative Example 4

Three types of precursors, Li₂S, P₂S₅, and LiCl, were dry-mixed (ball milling) at a molar ratio of 1.9 : 0.5 : 1.6. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{5.4}PS_{4.4}Cl_{1.6} having an argyrodite-type crystal structure. All of the above process was performed in an inert Ar atmosphere.

The above-described Li_{5.4}PS_{4.4}Cl_{1.6} having an argyrodite-type crystal structure was used as a solid electrolyte of Comparative Example 4.

### Comparative Example 5

Four types of precursors, Li₂S, P₂S₅, LiCl, and LiBr, were dry-mixed (ball milling) at a molar ratio of 1.9 : 0.5 : 1.0 : 0.6. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{5.4}PS_{4.4}Cl_{1.0}Br_{0.6} having an argyrodite-type crystal structure. All of the above process was performed in an inert Ar atmosphere.

The above-described Li_{5.4}PS_{4.4}Cl_{1.0}Br_{0.6} having an argyrodite-type crystal structure was used as a solid electrolyte of Comparative Example 5.

### Comparative Example 6

Three types of precursors, Li₂S, P₂S₅, and LiBr, were dry-mixed (ball milling) at a molar ratio of 2.2 : 0.5 : 1.0. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{5.4}PS_{4.7}Br_{1.0} having an argyrodite-type crystal structure. All of the above process was performed in an inert Ar atmosphere.

The above-described Li_{5.4}PS_{4.7}Br_{1.0} having an argyrodite-type crystal structure was used as a solid electrolyte of Comparative Example 6.

### Comparative Example 7

Three types of precursors, Li₂S, P₂S₅, and LiBr, were dry-mixed (ball milling) at a molar ratio of 2.15 : 0.5 : 1.0. At the time of the dry-mixing, planetary ball mill equipment with a zirconia ball was used, which was rotated at a rate of 300 rpm to 700 rpm for uniform mixing. Thereafter, the obtained mixed precursor was crystallized by 12 hours of heat treatment at 450 °C to 550 °C, and then pulverized through the ball milling to prepare Li_{5.3}PS_{4.65}Br_{1.0} having an argyrodite-type crystal structure. All of the above process was performed in an inert Ar atmosphere.

The above-described Li_{5.3}PS_{4.65}Br_{1.0} having an argyrodite-type crystal structure was used as a solid electrolyte of Comparative Example 7.

### Experimental Example 1: Evaluation of ion conductivity retention rate

### - Measurement of initial ion conductivity

150 mg of solid electrolyte powder prepared in each of Examples 1 and 2 and Comparative Examples 1 to 7 was taken immediately after the preparation and introduced into a SUS mold having a diameter of 13 mm. The mold was mounted on a press machine together with PEEK for insulation and a potentiostat was connected to the SUS mold. After performing pressing at 370 MPa to sufficiently densify the electrolyte structure, the pressure was slowly lowered and maintained at 100 MPa, and the alternating current impedance was measured from a measurement frequency of 1 Hz to 7 Mhz. Using the Nyquist plot, the ion conductivity was calculated from the measured resistance values, and shown in Table 1 below. All the measurements were performed in a drying room at a temperature of 22 °C and a relative humidity of 0.7%.

### - Measurement of ion conductivity after exposure to moisture

150 mg of solid electrolyte powder prepared in each of Examples 1 and 2 and Comparative Examples 1 to 7 was taken immediately after having been exposed in the air having a relative humidity of 1.91% for 5 hours, and introduced into a SUS mold having a diameter of 13 mm. The mold was mounted on a press machine together with PEEK for insulation and a potentiostat was connected to the SUS mold. After performing pressing at 370 MPa to sufficiently densify the electrolyte structure, the pressure was slowly lowered and maintained at 100 MPa, and the alternating current impedance was measured from a measurement frequency of 1 Hz to 7 Mhz. Using the Nyquist plot, the ion conductivity after the exposure to moisture was calculated from the measured resistance values, and shown in Table 1 below. All the measurements were performed in a drying room at a temperature of 22 °C and a relative humidity of 0.7%.

According to Equation 1 below, the ion conductivity retention rate was calculated and shown in Table 1 below. Ion conductivity retention rate (%) = Ion conductivity after exposure to moisture (mS/cm)/Initial ion conductivity (mS/cm) × 100

**[Table 1]**

| Classification | Composition | Ion conductivity retention rate (%) |
|---|---|---|
| Example 1 | Li_{5.5}P_{0.9}Ga_{0.1}S_{4.65}Br_{1.0} | 70 |
| Example 2 | Li_{5.5}P_{0.95}Ga_{0.05}S_{4.7}Br_{1.0} | 67 |
| Comparative Example 1 | Li₆PS₅Br_{1.0} | 55 |
| Comparative Example 2 | Li_{6.2}P_{0.9}Ga_{0.1}S₅Br_{1.0} | 40 |
| Comparative Example 3 | Li_{5.4}PS_{4.4}Cl_{1.2}Br_{0.4} | 32 |
| Comparative Example 4 | Li_{5.4}PS_{4.4}Cl_{1.6} | 18 |
| Comparative Example 5 | Li_{5.4}PS_{4.4}Cl_{1.0}Br_{0.6} | 40 |
| Comparative Example 6 | Li_{5.4}PS_{4.7}Br_{1.0} | 52 |
| Comparative Example 7 | Li_{5.3}PS_{4.65}Br_{1.0} | 54 |

Examples 1 and 2 are cases in which gallium cations were doped and the molar number of lithium (11-(5a+3b+c+2x)) was controlled to less than 6, wherein the solid electrolyte of each of Examples 1 and 2 was confirmed to have an ion conductivity retention rate of more than 60%, and accordingly, the solid electrolyte of the present invention has an effect of decreasing the rate of deterioration in ion conductivity after exposure to moisture, and maintaining the electrolyte structure despite the exposure to moisture.

On the other hand, Comparative Examples 1 to 7 are cases in which gallium cations were not doped, or the molar number of lithium was 6 or greater, wherein the ion conductivity retention rate was lower than that of the solid electrolytes of Examples 1 and 2, and particularly, in the case of Comparative Example 2, despite the doping of the gallium cations, the molar number of lithium corresponded to 6 or greater, so that it can be confirmed that the ion conductivity retention rate was low. In addition, in the case of Comparative Examples 3 to 7, the ion conductivity was significantly reduced after the exposure to moisture, corresponding to a low level of ion conductivity, so that the exposure to moisture may cause problems with the electrolyte structure and stability of the manufacturing process.

### Experimental Example 2: Evaluation of impurities detection

Example 1 and Comparative Example 2 were evaluated for impurities detection. The detection of impurities of the solid electrolyte powder was calculated using XRD measurements and the Rietveld refinement analysis. For the XRD equipment, Bruker Co.'s D8 Endeavor, Cu Kα radiation, and 1.5406 Å wavelength were used, and the measurement conditions of a scan rate of 2 deg/min and a 2 theta angle of 10 degrees to 90 degrees were applied under non-atmospheric exposure. Impurities were identified using the TOPAS Rietevld refinement program, and the detection of impurities was evaluated. XRD data of Example 1 and Comparative Example 2 are shown in FIG. 1 and Table 2.

**[Table 2]**

| Classification | Argyrodite (wt%) | Impurities (wt%) | |
|---|---|---|---|
| | | LiBr | Li₂S |
| Example 1 | 100 | - | - |
| Comparative Example 2 | 97 | 2 | 1 |

Referring to Table 2 and FIG. 1 above, in the case of Example 1 in which gallium was doped but the molar number of lithium was less than 6, no impurities were detected, but in the case of Comparative Example 2 in which the molar number of lithium was greater than 6, impurities such as Li₂S or LiBr were generated, so that ion conductivity may be degraded, and accordingly, it can be confirmed that the ion conductivity retention rate is also poor.

## Claims

1. A solid electrolyte having a composition represented by Chemical Formula 1 below:
[Chemical Formula 1] Li_{11-(5a+3b+c+2x)}PₐGa_{b}S_{5-(c+x)}X_{1+c}
wherein in Chemical Formula 1 above,
X is one or more selected from F, Cl, Br, and I, and
5.0<5a+3b+c+2x<6.0, 0<b≤0.5, 0≤c<0.7, 0<c+x<1, and 1≤a+b≤1.5.

2. The solid electrolyte of claim 1, wherein b is 0.01≤b≤0.3.

3. The solid electrolyte of claim 1, wherein the 5a+3b+c+2x is 5.0<5a+3b+c+2x≤5.7.

4. The solid electrolyte of claim 1, wherein the solid electrolyte has an argyrodite-type crystal structure.

5. The solid electrolyte of claim 1, wherein the solid electrolyte has an ion conductivity retention rate of 60% or more according to Equation 1 below: Ion conductivity retention rate (%) = Ion conductivity after exposure to moisture (mS/cm)/Initial ion conductivity (mS/cm) × 100
wherein in Equation 1 above,
initial ion conductivity is a value measured at 22 °C, immediately after preparing the solid electrolyte, and
ion conductivity after exposure to moisture is a value measured at 22 °C, immediately after exposing the solid electrolyte in the air having a relative humidity of 1.91% for 5 hours.

6. The solid electrolyte of claim 5, wherein the initial ion conductivity is 2.0 mS/cm or greater to 20.0 mS/cm or less.

7. The solid electrolyte of claim 5, wherein the ion conductivity after exposure to moisture is 1.2 mS/cm or greater to 12.0 mS/cm or less.

8. The solid electrolyte of claim 1, wherein the solid electrolyte has a total content of impurities of 2 wt% or less.

9. A method for preparing a solid electrolyte, the method comprising:
(S1) dry-mixing a sulfide-based solid electrolyte raw material and a doping element to prepare a precursor mixture; and
(S2) heat-treating the precursor mixture,
wherein:
the sulfide-based solid electrolyte raw material includes Li₂S, P₂S₅, and LiX;
the X is F, Cl, Br, or I;
the Li₂S is included in an amount of greater than 0.97 mole to less than 2.5 mole based on 1 mole of LiX; and
the doping element is Ga.

10. The method of claim 9, wherein the step (S1) is performed by ball-milling the sulfide-based solid electrolyte raw material and the doping element.

11. The method of claim 9, wherein the heat-treatment in the step (S2) is performed at a temperature of 300 °C to 600 °C.

12. An all-solid-state battery comprising a solid electrolyte according to any one of claims 1 to 8.
